# EUROPEAN PATENT SPECIFICATION

(11) **EP 4 033 159 B1**
(45) Date of publication and mention of the grant of the patent: **03.01.2024**
(21) Application number: 22162089.1
(22) Date of filing: 18.05.2018
(51) Int. Cl.: F24D 5/12, F24D 11/02, F25B 25/00, F25B 30/02, F25B 40/02

(54) **THERMOTECHNICAL SYSTEM AND METHOD FOR HIGH EFFICIENCY HEAT TRANSFER AND DISTRIBUTION**
THERMOTECHNISCHES SYSTEM UND VERFAHREN ZUR HOCHEFFIZIENTEN WÄRMEÜBERTRAGUNG UND -VERTEILUNG
SYSTÈME THERMOTECHNIQUE ET PROCÉDÉ DE TRANSFERT ET DE DISTRIBUTION DE CHALEUR À HAUT RENDEMENT

(30) Priority: 18.05.2017 IT 201700054011
(43) Date of publication of application: 27.07.2022
(62) Divisional of application: 18731893.6
(73) Proprietor: Giacomini S.p.A., 28017 San Maurizio d'Opaglio (NO) (IT)
(72) Inventor: ROSA BRUSIN, Marco, 28017 San Maurizio d'Opaglio (NOVARA) (IT); MOLINA, Samuele, 28017 San Maurizio d'Opaglio (NOVARA) (IT)
(74) Representative: Praxi Intellectual Property Milano

(56) References cited:
- WO-A1-2007/076602
- WO-A1-2016/042585
- US-A- 2 462 557

## Description

The present invention refers to a thermotechnical system and a method for high efficiency heat transfer and distribution.

More specifically, the present invention refers to a thermotechnical system and the method thereof for high efficiency heat transfer and distribution in the air conditioning of an environment by means of a thermal machine creating a thermodynamic cycle.

### BACKGROUND

It is well known, in the fields of the thermotechnics and thermotechnical systems, that thermal machines are used to operate according to traditional thermodynamic cycles in heating and air conditioning systems for environments. In particular, air conditioning systems for civil and industrial use are widely used, which are provided with thermal machines to carry out a refrigeration cycle, said systems being suitable for heating and cooling environments to be air-conditioned.

Among the different types of thermal and systems machines for the generation of heat for environment heating, the refrigeration thermal machines called "heat pumps" and "refrigerators" have established themselves over the years for their versatility and simplicity of installation in the construction of functional thermotechnical systems in every period of the year, both for heating and cooling and such as to ensure at the same time high levels of efficiency.

Said traditional thermal machines work by transferring heat from a lower temperature environment to a higher temperature environment, providing mechanical work according to a known thermodynamic cycle for practical use. The heat is transmitted by exploiting the changes in the liquid/steam state of a particular refrigerant or refrigerating fluid and is transferred, through traditional heat exchangers, by means of the thermovector fluid in a thermal circuit suitable to transfer the heat into the environment to be air-conditioned.

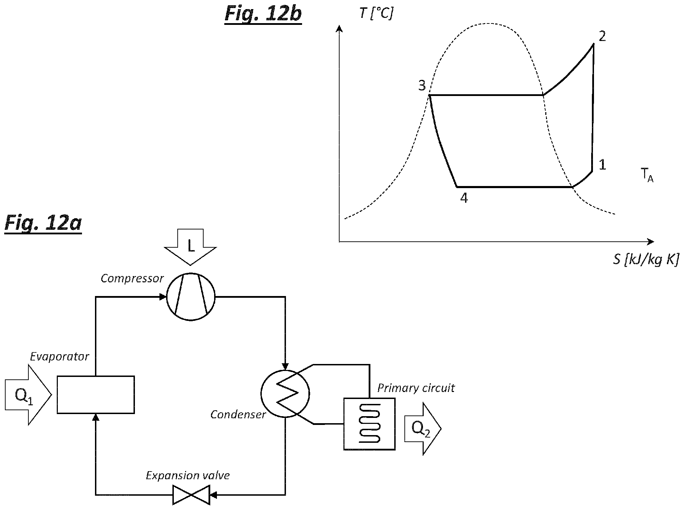

An example of a typical practical thermodynamic cycle, carried out by means of a heat pump (referring first to figures 12a and 12b), is that of a generic refrigerant fluid brought to the state of dry saturated steam and delivered to the compressor of the heat pump where, with the contribution of mechanical work L, typically by means of an electric motor, is compressed isentropically (section 1-2). The refrigerant fluid brought to the state of superheated steam as a result of compression and the resulting increase in pressure is then cooled and delivered to the condenser of the heat pump where, after a first cooling section, it begins to condense. During the transition from the gaseous to the liquid state, the refrigerant fluid releases heat to the surrounding environment (section 2-3). The transferred heat Q₂ is collected by means of a heat exchanger, e.g. A liquid-air or liquid-liquid heat exchanger, which transfers the heat Q₂ into a secondary circuit, which distributes it to the environment to be air-conditioned.

The fluid in a liquid condition is now expanded through an expansion valve through a isenthalpic narrow passage (section 3-4) with a consequent lowering of pressure such as to bring the fluid to a temperature lower than the external environment and such as to trigger again the change of state. The low temperature refrigerant fluid is then delivered to the evaporator of the heat pump, where, following the lowering of temperature caused by evaporation, it extracts heat Q₁ from the external environment (section 4-1), after which the cycle is repeated with a new step of fluid compression (section 1-2).

An important feature of these types of thermotechnical systems is the total efficiency of the refrigerating machine as measured by means of a coefficient of performance (COP) defined as the ratio between the thermal power obtained (produced) and the absorbed power, generally electrical power; this coefficient is directly proportional to the performance of the machine where a high COP value is synonymous with high efficiency.

In general, the higher the efficiency of a heat pump, the smaller the difference in temperature ΔT between the two heat exchange environments.

The search for greater efficiency and greater versatility of heating and air conditioning systems has now become increasingly important, both as regards energy saving and as regards the harmonisation and compatibility of new generation systems on existing structures which are subject to structural and regulatory constraints.

In the light of the above, the traditional thermotechnical systems provided with heat pumps make it possible to operate in optimal conditions mainly by means of the well-known low temperature distribution systems such as radiant panels or other integrated distribution systems, installed, for example, on the floor and ceiling of the environment to be air-conditioned, or, even if with lower performance, by means of fan coils. These radiant distribution systems work advantageously with a condensation temperature of the refrigerant fluid around 35 °C, while with the use of distributors of the fan coil type this temperature is around 50 °C, which jeopardizes the performance of the system.

It is also widely known and widely used in the current state of the art the alternative operation of a thermal machine operating according to a thermodynamic refrigeration cycle, both configured as a heat pump and as a refrigerator or refrigeration machine in cooling mode, so as to transfer, introducing or absorbing alternately heat between an internal environment and an external environment.

The thermal machines configured work also as refrigerators transferring heat from a lower temperature environment (internal environment) to a higher temperature environment (external environment), providing mechanical work according to a known thermodynamic cycle for practical use, carried out on a refrigerant fluid.

The traditional heating systems operating both in heating and cooling of an internal environment are generally provided with appropriate switching valves to reverse the circulation of the refrigerant of the thermal machine in the system and exchange the operation between the condenser and the evaporator, and vice versa. In the following disclosure the evaporator is constructively similar to the condenser previously described, the difference in denomination being due to the type of change of state of the refrigerant fluid in the thermodynamic cycle.

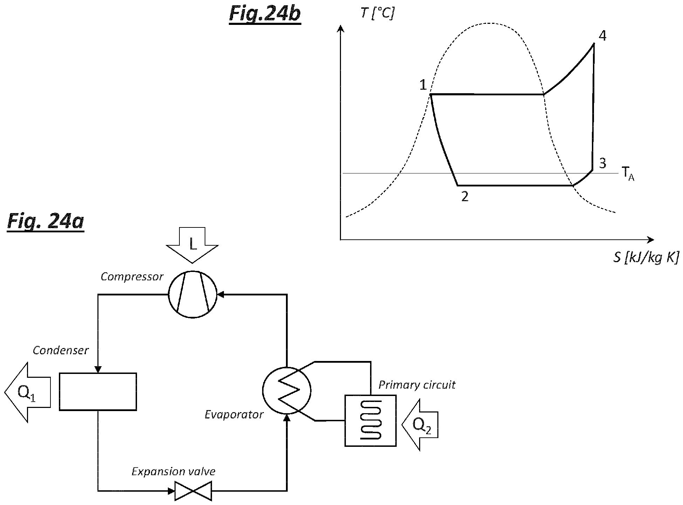

Referring first also to figures 24a and 24b, a further example of a typical practical thermodynamic cycle is depicted, implemented by means of a thermal machine operating as a refrigerator or a refrigerating machine in cooling mode, where the refrigerant fluid brought to the state of dry saturated steam and delivered to the compressor of the refrigerator, where with the contribution of mechanical work L, typically by means of an electric motor, is compressed isentropically (section 3-4). The refrigerant fluid brought to the state of superheated steam as a result of compression and the resulting increase in pressure is then cooled and delivered to the condenser of the refrigerator (which is the evaporator in the operation of the thermal machine as a heat pump) where, after a first cooling section, it begins to condense. During the transition from the gaseous to the liquid state, the refrigerant fluid releases heat Q₂ to the external environment (section 4-1).

The fluid in a liquid condition is now expanded through a expansion valve through a isenthalpic narrow passage (section 1-2) with a consequent lowering of pressure such as to bring the fluid to a temperature lower than the internal environment and such as to trigger again the change of state. The low temperature refrigerant fluid is then delivered to the evaporator of the refrigerator (which is the condenser during the operation of the thermal machine as a heat pump), where after the lowering of temperature caused by evaporation, it extracts heat Q₁ from the internal environment (section 4-1). The heat Q₁ released from the internal environment is absorbed by means of a heat exchanger, such as a liquid-air or liquid-liquid heat exchanger, which transfers the heat Q₁ in a primary circuit where it is exchanged with the fluid at lower temperature, after which the cycle is repeated with a new compression step of the fluid (section 1-2).

An important characteristic of these types of thermotechnical systems is the total efficiency of the refrigerating machine as measured by means of an Energy Efficient Ratio (EER) defined as the ratio between the thermal power obtained (produced) and the absorbed power, generally electrical power; this coefficient is directly proportional to the performance of the machine where a high EER value is synonymous with high efficiency.

In general, the higher the efficiency of a heat pump, the smaller the difference in temperature ΔT between the two heat exchange environments.

These traditional thermotechnical systems for heating and air conditioning, provided with thermal machines such as heat pumps or refrigerators, however, have drawbacks and operating limits.

An important limit that influences the efficiency of these heating systems is due to the fact that the effectiveness of these systems is appreciable only if the environment to be air-conditioned has a good thermal insulation to the external environment. Currently, in many applications on existing buildings, due to environment problems or constraints of structural, historical type or building regulations, it is not possible to insulate the environment to be air-conditioned in such a way as to ensure appropriate thermal insulation, for example by means of typical commercially available products for insulation such as insulating panels, thermal insulation coats etc.

Another important limitation and drawback of these traditional systems, due to the lack of adequate thermal insulation, is that they have a significant difference between the temperature near the wall and that of the environment to be air-conditioned, a difference that promotes the condensation of water vapour present in the air when it comes into contact with the wall at a lower temperature, thus increasing the moisture and the condensation phenomena on the wall itself.

Another drawback is that the unwanted increase in the condensation moisture on cold walls promotes the development of bacteria and moulds that can be harmful to human health and cause limited comfort at the coldest temperature from the perimeter walls. Moisture and condensation also contribute to a faster deterioration of surface trims, putty and plasters on interior walls.

Another limit of the refrigerating thermal machines of the traditional heating and air conditioning systems is that of having volumetric compressors that do not support a refrigerant fluid at the inlet in the wet steam condition, that is, still partially in the liquid state. The presence of incompressible droplets of liquid can damage the mechanical members of the compressor and reduce its efficiency.

In order to try to overcome these limits related to the presence of cold walls, there is a general tendency towards a more intense use of the heating thermotechnical system and the thermal machine thereof, since the users' perception of cold exists even when the target temperature has been reached in the environment to be air-conditioned, keeping the system in operation for longer than necessary.

Furthermore, in order to try to overcome the limits related to the presence of insulation of the walls from external heat, there is a general tendency to a more intense use of the thermotechnical cooling system and of the thermal machine thereof, since the heat dispersions towards the inside do not allow to keep constant the lowest temperature in the internal environment with the consequent continuous operation of the thermal machine.

Document US-A-2462557 describes heat pump means for controlling the temperature of the wall of a room.

Document WO2016/042585 discloses a thermal shell for a building which constitutes a multi-layer system formed by three integral elements.

Document WO2007/076602 describes a superconductor refrigeration system that incorporates thermal superconducting elements accommodating heat transfer.

### SUMMARY OF THE INVENTION

The present invention is disclosed in independent claims 1 and 14. Further embodiments are disclosed in dependent claims.

More specifically, the purpose of this invention is to provide a thermotechnical system and a method for high efficiency heat transfer and distribution with a better and increased efficiency of the thermal machine and the thermotechnical system as a whole.

Another possible purpose of this invention is to provide a thermotechnical system and a method for high efficiency heat transfer and distribution that can ensure a high level of living comfort even without adequate thermal insulation of the walls or perimeter surfaces of the environment to be air-conditioned.

A further possible purpose of this invention is to provide users with a more versatile thermotechnical system and a more versatile method for high efficiency heat transfer and distribution that is easy and quick to install on existing structures and buildings with environment limitations or historical or building constraints.

An additional a purpose of this invention is to provide users with a thermotechnical system and a method for high efficiency heat transfer and distribution that can limit the formation of condensation on the walls or perimeter surfaces of the environment to be air-conditioned, ensuring the same improved health conditions of the environment.

Still another possible purpose of this invention is to provide a thermotechnical system and a method for high efficiency heat transfer and distribution that can ensure a high level of resistance and reliability over time, such as to be easily and economically realized.

These and other purposes are achieved by the thermotechnical system and the method for high efficiency heat transfer and distribution according to the respective independent claims.

### BRIEF DESCRIPTION OF THE DRAWINGS

The constructive and functional characteristics of the thermotechnical system and the method for high efficiency heat transfer and distribution, object of the present invention, can be better understood from the following detailed description, in which reference is made to the attached drawings which represent some preferred and non-limiting embodiments, wherein:
figure 1 is a schematic representation of a thermotechnical system for the high efficiency heat transfer and distribution according to an example not being part of the present invention;
figure 2 is a schematic representation of a simplified thermotechnical system for the high efficiency heat transfer and distribution according to an example not being part of the present invention with a single heat exchanger;
figure 3 is a schematic representation of the thermotechnical system for the high efficiency heat transfer and distribution according to an example not being part of the present invention, with the distribution of heat by means of a fluid wall (air blade);
figure 4 is a schematic representation of the thermotechnical system for the high efficiency heat transfer and distribution according to an example not being part of the present invention, with n heat exchangers for a localized heat distribution;
figure 5 is a schematic representation of a variant of the simplified example of figure 2 of the thermotechnical system for the high efficiency heat transfer and distribution, with n thermal circuits connected in series with a single heat exchanger;
figure 6 is a schematic representation of another variant of the simplified example of figure 2 of the thermotechnical system for the high efficiency heat transfer and distribution with n circuits connected in parallel with a single heat exchanger;
figure 7 is a schematic representation of a variant of the thermotechnical system for the high efficiency heat transfer and distribution according to an example not being part of the present invention with a primary thermal circuit connected to a first heat exchanger and an additional heat exchanger, subsequent to the first, to which additional thermal circuits are thermally connected in parallel;
figure 8 is a schematic representation of a further variant of the thermotechnical system for the high efficiency heat transfer and distribution according to an example not being part of the present invention with a primary thermal circuit connected to a first heat exchanger and a further heat exchanger, subsequent to the first, to which additional thermal circuits are thermally connected in series;
figure 9 is a schematic representation of the thermotechnical system for the high efficiency heat transfer and distribution according to an example not being part of the present invention, with n heat exchangers, arranged in parallel, each thermally connected to a thermal circuit for the localized heat distribution;
figure 10 is a schematic representation of the thermotechnical system for the high efficiency heat transfer and distribution according to an example not being part of the present invention, with n heat exchangers arranged in succession, each thermally connected to a thermal circuit for the distribution of heat in areas or volumes concentric with each other;
figure 11a is a schematic representation of a pressure-enthalpy (p-H) diagram of the refrigeration cycle of the operation of the thermal machine of the thermotechnical system for the high efficiency heat transfer and distribution according to an example not being part of the present invention;
figure 11b is a schematic representation of temperature-enthalpy (T-S) diagram of the refrigeration cycle of the operation of the thermal machine of the thermotechnical system for the high efficiency heat transfer and distribution according to an example not being part of the present invention;
figure 11c is a table containing some exemplary simulation experimental data according to the diagrams in figures 11a and 11b;
figure 12a is a schematic representation of a traditional thermotechnical system with heat pump for heat transfer and distribution according to the known art;
figure 12b is a schematic representation of a T-S diagram of the refrigeration cycle of the heat pump operation of a generic thermotechnical system for heat transfer and distribution according to the known art;
figure 13 is a schematic representation of a general and preferred embodiment of the thermotechnical system for the high efficiency heat transfer and distribution of the present invention in the operation as a refrigerator;
figure 14 is a schematic representation of a simplified embodiment of the thermotechnical system for the high efficiency heat transfer and distribution of the present invention with a single heat exchanger in the operation as a refrigerator;
figure 15 is a schematic representation of an application embodiment of the thermotechnical system for the high efficiency heat transfer and distribution of the present invention, in the operation as a refrigerator and with heat absorption by means of a fluid wall (air blade);
figure 16 is a schematic representation of another embodiment of the thermotechnical system for the high efficiency heat transfer and distribution of the present invention in the operation as a refrigerator with n heat exchangers for a localized heat distribution;
figure 17 is a schematic representation of a variant of the simplified embodiment of figure 14 of the thermotechnical system for the high efficiency heat transfer and distribution of the present invention in the operation as a refrigerator and with n thermal circuits connected in series with a single heat exchanger;
figure 18 is a schematic representation of another variant of the simplified embodiment of figure 14 of the thermotechnical system for the high efficiency heat transfer and distribution of the present invention in the operation as a refrigerator and with n circuits connected in parallel with a single heat exchanger;
figure 19 is a schematic representation of a variant of the main embodiment of the thermotechnical system for the high efficiency heat transfer and distribution of the present invention in the operation as a refrigerator and with a primary thermal circuit connected to a first heat exchanger and an additional heat exchanger, subsequent to the first, to which additional thermal circuits are thermally connected in parallel;

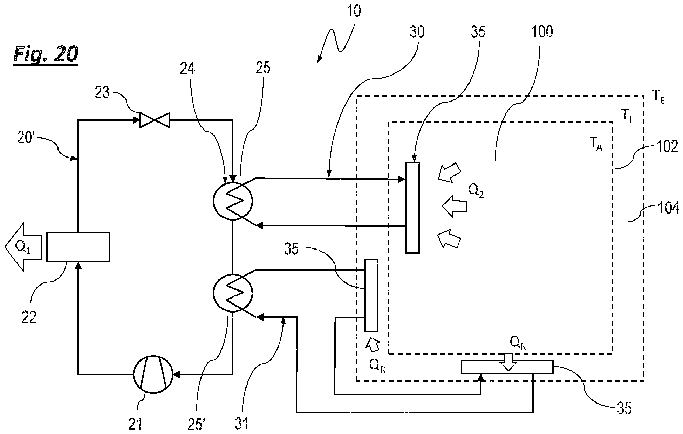

figure 20 is a schematic representation of a further variant of the main embodiment of the thermotechnical system for the high efficiency heat transfer and distribution of the present invention in the operation as a refrigerator and with a primary thermal circuit connected to a first heat exchanger and a further heat exchanger, subsequent to the first, to which additional thermal circuits are thermally connected in series;
figure 21 is a schematic representation of another, possible embodiment of the thermotechnical system for the high efficiency heat transfer and distribution of the present invention in the operation as a refrigerator and with n heat exchangers, arranged in parallel, each thermally connected to a thermal circuit for the localized heat distribution;
figure 22 is a schematic representation of another, possible embodiment of the thermotechnical system for the high efficiency heat transfer and distribution of the present invention in the operation as a refrigerator and with n heat exchangers arranged in succession, each thermally connected to a thermal circuit for the absorption of heat in areas or volumes concentric with each other;
figure 23a is a schematic representation of a pressure-enthalpy (p-H) diagram of the refrigeration cycle of the operation of the thermal machine of the thermotechnical system for the high efficiency heat transfer and distribution of the present invention in the operation as a refrigerator;
figure 23b is a schematic representation of temperature-enthalpy (T-S) diagram of the refrigeration cycle of the operation of the thermal machine of the thermotechnical system for the high efficiency heat transfer and distribution of the present invention in the operation as a refrigerator;
figure 23c is a table containing some exemplary simulation experimental data according to the diagrams in figures 23a and 23b;
figure 24a is a schematic representation of a traditional thermotechnical system with refrigerator for heat transfer and distribution according to the known art;
figure 24b is a schematic representation of a T-S diagram of the refrigeration cycle of the refrigerator operation of a generic thermotechnical system for heat transfer and distribution according to the known art.

### DETAILED DESCRIPTION OF THE INVENTION

Referring first to the scheme of figure 12a and the graph of figure 12b, from the temperature-entropy T-S diagram of the thermodynamic cycle of the thermal machine of the heat pump type, of a thermotechnical system according to the known art, it is evident how, once absorbed by the primary thermal circuit of distribution the project quantity of heat, the refrigerant liquid still possesses a portion of heat at a temperature higher than that of the environment to be heated.

By way of example, with typical devices for transferring and distributing heat, such as fan coils, a temperature gradient can generally be in a range of about 25 - 30 °C with respect to the temperature T_{A} of the environment be heated, whereas with transfer devices of radiant type and the like such temperature is generally between 10 - 15 °C.

Some examples describe an innovative thermotechnical system, provided with a thermal machine of the heat pump type, capable of recovering the portion of residual heat leaving the condenser of the heat pump, by subcooling the refrigerant fluid of the heat pump at the section 3-4 of the graph of figure 12b. Said refrigerant has, in fact, at the condenser outlet an energy in the form of heat available to be advantageously distributed in a volume arranged around the perimeter surface of the environment to be air-conditioned, so as to create an insulating shell or cushion. The heat pump used as a thermal machine operating according to a reverse refrigeration cycle is the only one that can be advantageously used for the purposes of implementing this example not being part of the present invention as it differs from a thermotechnical system provided with a boiler with a burner in which the consumption of energy to generate heat, to heat the cold thermovector fluid returning to the boiler, depends on the return temperature of the thermovector fluid itself; the lower the temperature, the more energy the boiler must spend to bring it back to the delivery temperature. Instead, in the case of the heat pump, and in general of any refrigeration machine, energy consumption does not depend on the temperature of the thermovector fluid before the isenthalpic narrow passage returning to the heat exchanger.

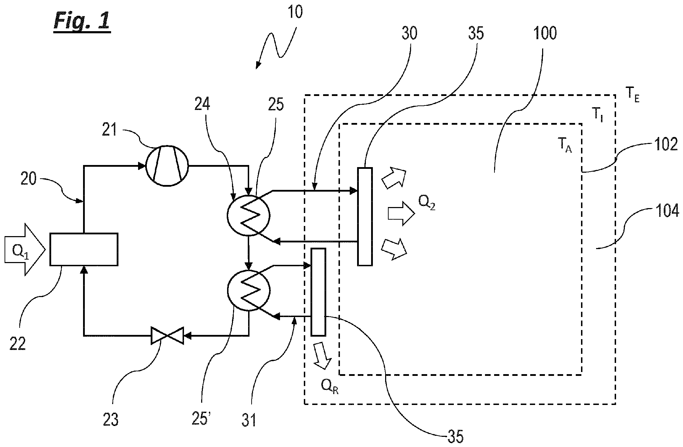

With particular reference to figures 1, 2 and 3, the thermotechnical system for the high efficiency heat transfer and distribution, globally indicated with 10, which shows an example not being part of the present invention, is provided with a thermal machine or heat pump 20 with a compressor 21, an evaporator 22, an expansion valve 23 and a condenser 24, and comprising at least an initial first exchanger 25 placed in a heat exchange connection with a primary thermal circuit 30 for the transfer of heat Q₂ to an internal environment 100 to be air-conditioned at a temperature T_{A}, by using known heat distribution means 35 .

Said thermotechnical system 10 is further placed in a thermal connection with a secondary thermal circuit 31 for the recovery of the subcooling heat Q_{R} of the primary thermal circuit 30, at a temperature usually lower than said primary thermal circuit 30, and generally at about the temperature T_{A} of the internal environment 100, said secondary thermal circuit 31 being suitable for distributing said subcooling heat Q_{R} over at least one perimeter surface 102 of said internal environment 100 in such a way as to define a thermally insulating volume 104 at a temperature T_{I}, developed around said perimeter surface 102 of the internal environment 100, said insulating volume 104 constituting an insulating a shell or buffer zone enclosing totally or partially said internal environment 100.

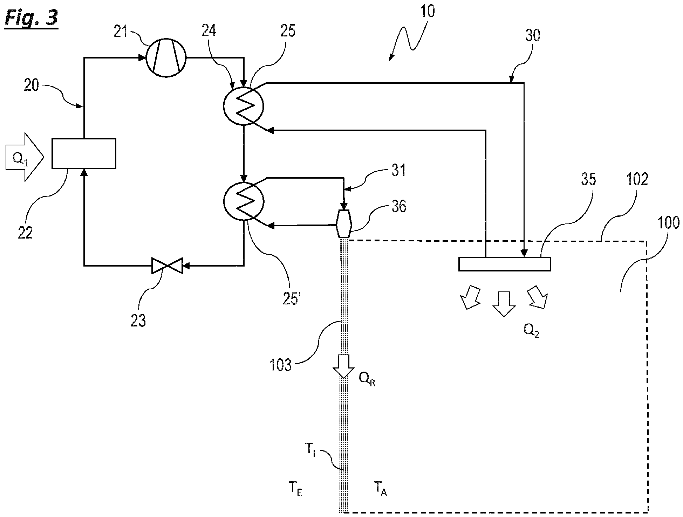

In an example not being part of the present invention, with particular reference to figures 1 and 3, the thermotechnical system 10 can comprise a further second heat exchanger 25', operating at a lower temperature than the first heat exchanger 25 and connected thermally, preferably in series, in succession to said first heat exchanger 25, said second heat exchanger 25' being in thermal connection with said secondary thermal circuit 31 suitable for the distribution of the portion of the recovery heat Q_{R}. Said second subcooling heat exchanger 25' releases the portion of heat Q_{R} recovered from the first heat exchange to the thermovector fluid of said secondary thermal circuit 31, which distributes said heat Q_{R} by known heat distribution means 35, at a temperature T_{A} equal to about that of the internal environment 100, distributing said heat in a fluid insulating volume 104 at a temperature T_{I} around the perimeter surface 102 or on the walls themselves of said internal environment 100. Such known heat distribution means 35 may comprise conventional radiant panels, fan coils, air blades or like heat distribution devices.

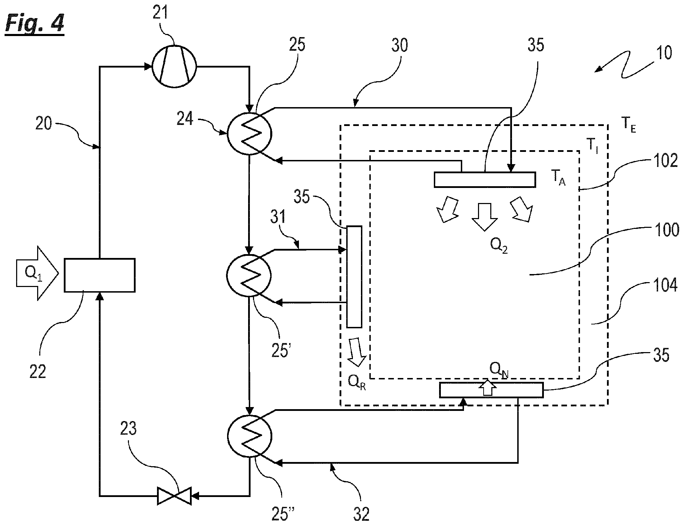

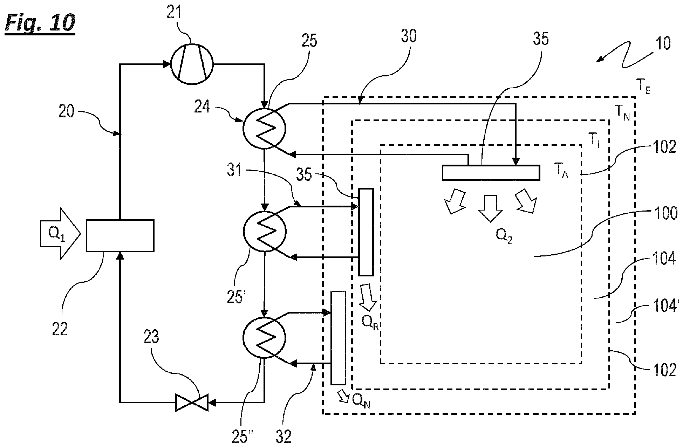

In other examples not being part of the present invention, with particular reference to figures 4, 9, and 10, the thermotechnical system 10 can comprise at least one additional n-th heat exchanger 25" placed in series or in parallel with said second heat exchanger 25', said n-th heat exchanger 25" being in thermal connection with one n-th thermal circuit 32 suitable for the heat recovery and exchange of additional heat portions Q_{N} on at least a part of said insulating volume 104 arranged around said internal environment 100, in such a way as to allow for a differentiated distribution of heat Q₂, Q_{R} and Q_{N} at different temperatures and in different zones or volumes, generally in the internal 100 and the insulating volume 104. In another further example not being part of the present invention, with particular reference to figure 10, the distribution of additional portions of subcooling heat Q_{N} can also take place in at least a further insulating volume 104' concentric to said insulating volume 104, said volumes 104, 104' being arranged to form *n* external insulating zones or concentric shells at temperatures T_{N} gradually decreasing.

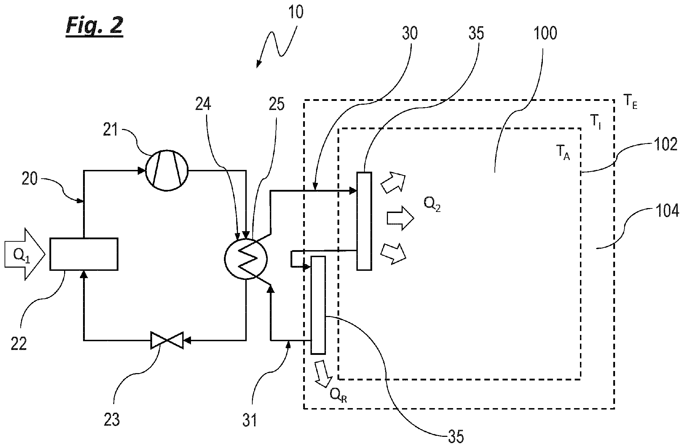

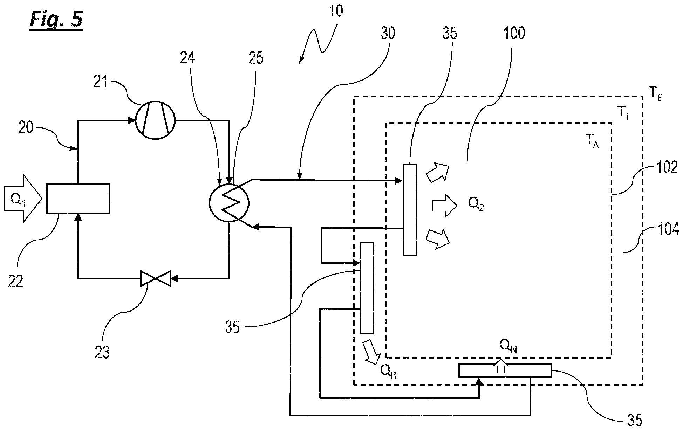

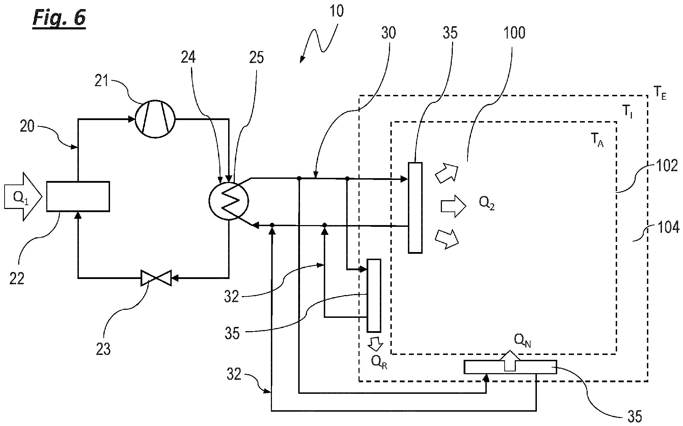

With reference to figures 5 and 6, in further possible alternative variants of the simplest configuration of said system 10 in figure 2, i.e. with only one heat exchanger 25, it is possible to provide for the use of said heat exchanger 25 connected thermally with n thermal circuits 30, 31 and 32 placed in parallel or in series, and suitable for operating at different thermal distribution temperatures.

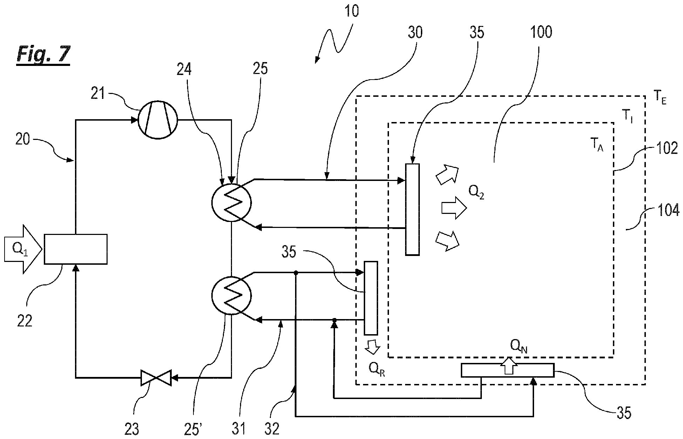

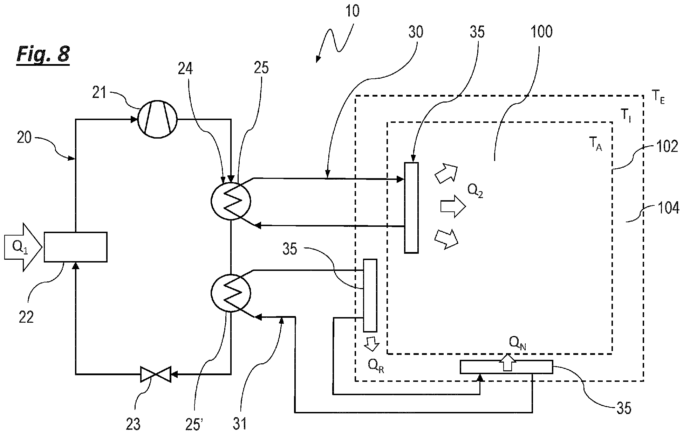

In further possible constructive variants of figures 7 and 8, alternative to the previous ones and comprising one n-th thermal circuit 32 connected to said second heat exchanger 25', said second thermal circuit 31 and said n-th thermal circuit 32 can be thermally connected to the second heat exchanger 25' and arranged in series or in parallel with each other.

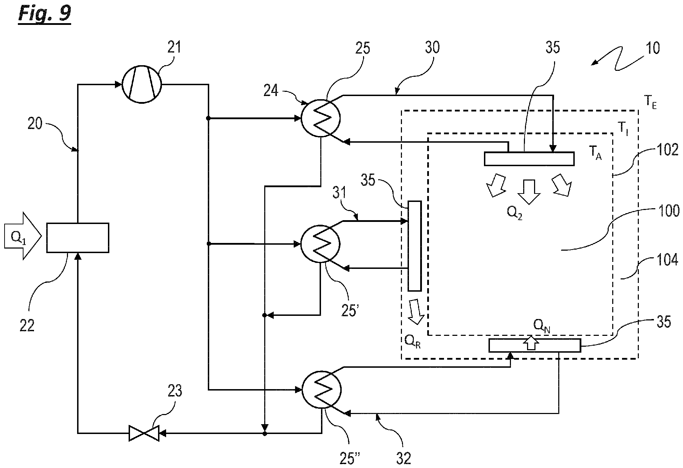

In a further variant of figure 9, alternative to the example not being part of the present inventionof figure 4 and comprising, in addition to a second heat exchanger 25', also one n-th heat exchanger 25", said first, second and n-th heat exchanger 25, 25', 25" can also be placed in thermal fluid connection in parallel with each other.

With reference to all the various variants of the figures, said insulating volume 104, defining a spatial shell of said internal environment 100 or a portion thereof, can comprise a wall or a solid separation surface between the internal environment 100 and the external environment, generally comprising also the fluid boundary layer of air in direct contact with the same wall, and can comprise, for example, a wall and/or a radiant panel located close to or on the perimeter surface 102 through which the recovered heat Q_{R} is distributed from the subcooling at a temperature T_{I}.

In other examples not being part of the present invention, the same insulating volume 104 can also be defined by an empty volume, or empty environment, located between the cavity of two walls or peripheral surfaces 102, where internally to said empty volume, empty environment or air casing the heat Q_{R} recovered by the subcooling is transferred and distributed, by using known heat distribution means 35, such as fan coils able to condition the air present in the cavity between the walls or other equivalent devices.

In a further example not being part of the present invention, with particular reference to Figure 3, said insulating volume 104, or a portion of the same volume, may not necessarily be defined by a solid wall or confined between two solid walls, but it may be defined only by a fluid wall 103 formed by a jet of air or fluid mass projected along the peripheral surface 102, preferably from the ceiling to the floor of the internal environment 100, by known heat distribution means such as a traditional jet or air blade 36, where the portion of heat Q_{R} recovered from subcooling at a temperature T_{I} is transferred to said jet of air projected along said wall 102.

There is an example not being part of the present invention, which discloses a method for high efficiency heat transfer and distribution, said method comprising the steps of:
- generating heat through mechanical work on a refrigerant fluid from a heat pump in a thermotechnical system 10;
- exchanging the heat generated by the heat pump 20 with a primary thermal circuit 30;
- transferring the heat of the primary thermal circuit 30 to an internal environment 100 to bring it to a temperature T_{A};

- recovering the portion of residual heat Q_{R} r with the heat exchange step;
- distributing the portion of residual heat Q_{R} in an insulating volume 104 arranged around said internal environment 100 in such a way as to create an insulating shell of said internal environment 100 at a temperature T_{I}.

Advantageously, the step of recovery of residual heat Q_{R} can take place by means of a second heat exchange step or subcooling, following the first heat exchange step, with a secondary thermal circuit 31 of subcooling the refrigerant fluid of the heat pump 20 or the thermovector fluid of a thermal circuit of distribution of a thermotechnical system 10.

The method may also comprise additional and subsequent n-th steps for the recovery of additional heat portions Q_{N}, such as the steps of:
- recovering the portion of residual heat Q_{N};
- distributing the residual proportion of heat Q_{N} in an insulating volume 104, 104' arranged around said internal environment 100 in such a way as to create a further insulating shell of said internal environment 100 at a temperature T_{N}.

Advantageously, the recovery step of the n-th portion of residual heat Q_{R} can take place also by means of one n-th heat exchange step or subcooling, following the step of distribution of heat Q_{R}, by using one n-th thermal circuit 32 of subcooling the refrigerant fluid of the heat pump 20 or the thermovector fluid of a thermal circuit of distribution of a thermotechnical system 10.

The description of the thermotechnical system 10 and of the method for high efficiency heat transfer and distribution of the present example not being part of the present invention shows the following operation.

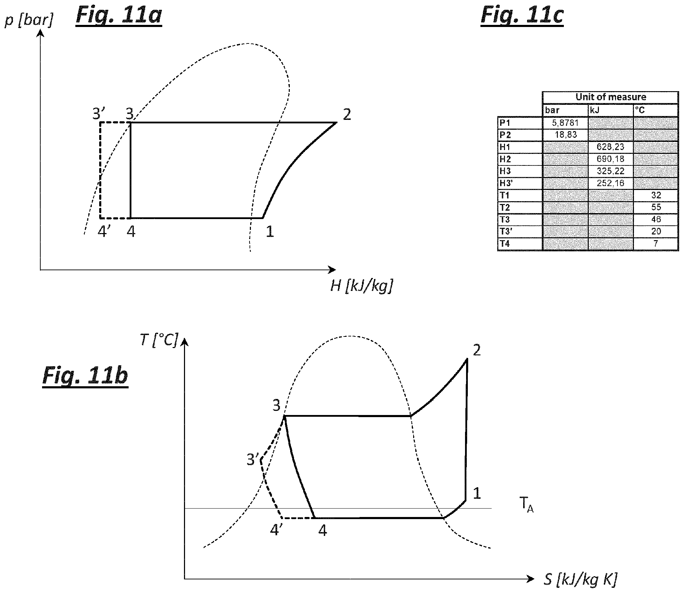

With reference to figures 11a, 11b and 11c, in order to evaluate the actual increase in efficiency obtained according to the present example, some numerical simulation data are shown. Starting from the characteristic parameters of a thermotechnical system provided with a heat pump according to known art, the results obtained are compared with those of a thermotechnical system 10 provided with subcooling and distribution of heat Q_{R} around the internal environment 100 to be air-conditioned in such a way as to create an insulating shell. The p-H (pressure-enthalpy) diagram in figure 11a and the relative table in figure 11c show, as already explained above, the various steps of the thermodynamic cycle of the thermal machine analysed in relation to the pressure p of the refrigerant fluid, as expressed in bar, and to the enthalpy H, as expressed in kJ (kilojoules), assimilable in first approximation to the energy content of the refrigerant fluid. It is evident how the substantial difference between the two proposed conditions differentiates the energy content (enthalpy) of the two thermal cycles and the respective temperatures. More precisely, during the condensation step of the refrigerant fluid the following conditions will occur, as shown in the table of figure 11c:
H3 = 325.22 kJ and H3' = 252.16 kJ. The difference between the reported enthalpies, equal to 73 kJ, shows that a further heat recovery during the condensation step leads to an effective gain in terms of energy. This heat is the heat that is subsequently redistributed on the peripheral internal surfaces 102 of the internal environment 100 to be air-conditioned. This leads to negligible differences with respect to the pressure of the refrigerant, while its temperature at the inlet to the expansion valve is much lower, as is also shown in the table of figure 11c, in fact it follows that: T3 = 46 °C and T3' = 20 °C.

With reference to the T-S diagram in figure 11b, it can be seen that the addition of a second heat exchange circuit acting as subcooling of the refrigerant fluid of the heat pump 20 allows the point of operation 3 of a traditional system to be moved to the limit curve of the T-S diagram, at the point 3', i.e. the point of operation of a system with subcooling and distribution of the subcooling heat, thus obtaining a lower temperature of the refrigerant fluid at the evaporator inlet, as shown by the measurements of T3' and H3' in the table in figure 11c. The area identified by the comparison of the curves between points 3, 3', 4, 4' determines the portion of heat Q_{R} recovered with the subcooling and such as to demonstrate the greater efficiency of the thermotechnical system and of the method of this example not being part of the present invention.

Referring for example to figure 1, the subcooling second heat exchanger 25' is arranged in series with the first heat exchanger 25, typically coinciding with the condenser of the heat pump 20. Said second heat exchanger 25' supplies a secondary thermal circuit 31 that delivers the thermovector fluid, to which the recovered portion of heat Q_{R} has been transferred, at a temperature equal to about the temperature T_{A} of the internal environment 100, to the walls of the internal environment 100 itself in such a way as to form an insulating volume 104 around the internal environment 100 at a temperature T_{I}, realizing a sort of shell or fluid insulating thermal buffer developed around the peripheral surfaces 102. The latter are therefore maintained at a temperature close to or around the temperature T_{A} of the internal environment 100 by known heat distribution means 35, which can be advantageously a plurality of radiant panels or fan coils, or by means of air blades 36.

The temperature of the insulating volume T_{I}, being greater than the temperature T_{E} of the external environment, decreases the thermal conductivity of the walls and the thermal gradient inward, so as to improve the overall efficiency of the heat pump 20.

Said insulating volume 104, within which the portion of heat Q_{R} recovered with the subcooling is redistributed, can be advantageously defined, in different application variants, depending on the structure or application where the thermotechnical system 10 is installed. In the event that the internal environment 100 is delimited by one or more solid walls such as walls, the heat Q_{R} recovered by the subcooling can be advantageously redistributed by a plurality of radiant panels arranged on said solid walls or realizing and comprising the walls themselves and their boundary layer.

In the event that said insulating volume 104 is defined between two solid walls of an internal environment 100, for example a cavity, the heat Q_{R} recovered by the subcooling can be advantageously distributed by means of fan coils or other heat distribution means suitable to bring the interspace between the two walls to the temperature T_{I}.

In other types of applications and construction variants, with particular reference to figure 3, the insulating volume 104 can also not necessarily be defined or confined between walls or solid walls but it can simply be defined by a fluid wall 103, advantageously projected between the internal environment 100 at temperature T_{A} and the external environment. The fluid wall 103 can be generated by an air blade 36 for distributing the heat Q_{R} recovered by the subcooling by means of a fluid jet at a temperature T_{I}.

Below are the embodiments of the present invention of the thermotechnical system for the high efficiency heat transfer and distribution, where the thermal machine is configured to operate as a refrigerator.

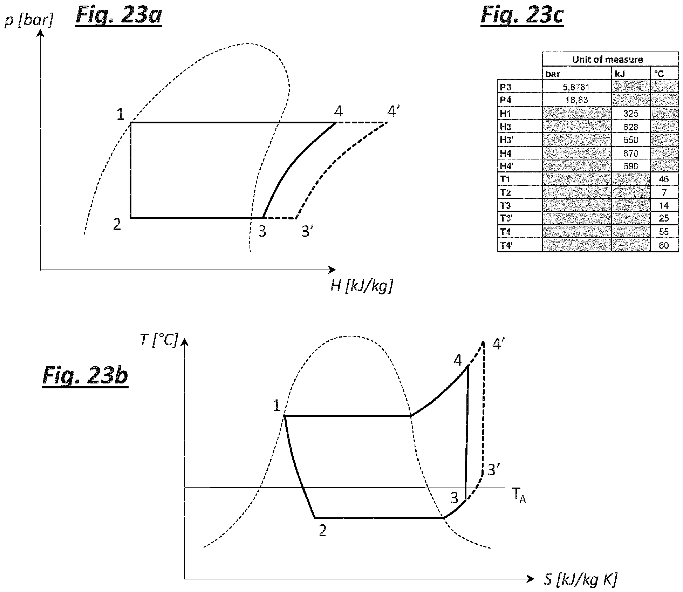

Referring first to the scheme of figure 23a and the graph of figure 23b, from the temperature-entropy T-S diagram of the thermodynamic cycle of the thermal machine of the refrigerator type, of a thermotechnical system according to the known art, it is evident how, once the project quantity of heat is absorbed by the internal environment, the refrigerant liquid still possesses an adsorption heat capacity able to extract a further portion of heat at a temperature higher than that of the environment to be cooled or air-conditioned. Exemplificatively, with typical devices for the heat distribution, transfer, and in this case, absorption, such as fan coils or the radiant type devices, a temperature gradient can be obtained that is generally comprised in the range of about 10 - 15°C with respect to the temperature T_{A} of the environment to be cooled and air-conditioned.

This invention describes also an innovative thermotechnical system 10, provided with a thermal machine of the refrigerator or thermal machine type in cooling mode, capable of recovering the portion of residual heat leaving the evaporator of the refrigerator, overheating the refrigerant fluid of the refrigerator at the section 3-4 of the graph of figure 24b, which is related to a known refrigerator. Said refrigerant fluid has, in fact, at the evaporator outlet, a residual thermal capacity of heat absorption available to be advantageously used to cool a volume at higher temperature arranged around the perimeter surface of the environment to be air-conditioned, so as to create a shell or buffer zone and to create at the same time an increase in the cooling capacity of the thermal machine.

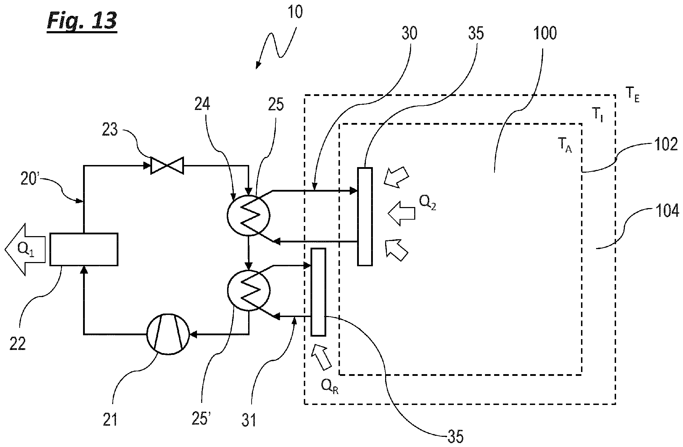

With particular reference to figures 13, 14 and 15, the thermotechnical system for the high efficiency heat transfer and distribution, globally indicated with 10, is provided with a thermal machine or refrigerator 20' with a compressor 21, an evaporator 24, an expansion valve 23 and a condenser 24, and comprising at least an initial first exchanger 25 placed in a heat exchange connection with a primary thermal circuit 30 for the transfer of heat Q₂ from an internal environment 100 to be air-conditioned at a temperature T_{A}, towards an external environment at a higher temperature, by using known heat distribution means 35 .

Said thermotechnical system 10 is further placed in a thermal connection, in series, with a secondary thermal circuit 31 for the recovery of the overheating heat Q_{R} of the primary thermal circuit 30, at a temperature higher than said primary thermal circuit 30, and generally at about the temperature T_{A} of the internal environment 100, said secondary thermal circuit 31 being suitable for adsorbing said overheating heat Q_{R} over at least one perimeter surface 102 of said internal environment 100 in such a way as to define a thermally insulating volume 104 at a temperature T_{I}, developed around said perimeter surface 102 of the internal environment 100, said insulating volume 104 constituting an insulating a shell or buffer zone enclosing totally or partially said internal environment 100.

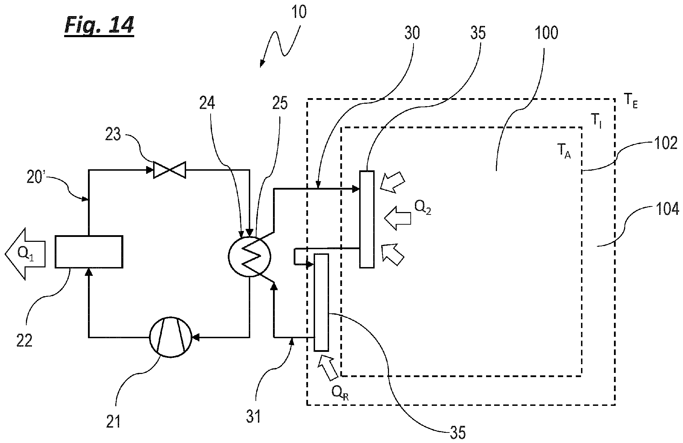

In the preferred embodiment, with particular reference to figures 13 and 14, the thermotechnical system 10 can comprise a further second heat exchanger 25', operating at a temperature higher than the first heat exchanger 25 and connected thermally, preferably in series, in succession to said first heat exchanger 25, said second heat exchanger 25' being in thermal connection with said secondary thermal circuit 31 suitable for the absorption and the recovery of the portion of heat Q_{R}. Said second overheating or superheating heat exchanger 25' adsorbs the portion of residual heat Q_{R} that the refrigerant fluid can still adsorb after the first heat exchange by the thermovector fluid of said secondary thermal circuit 31, which transfers said heat Q_{R} by known heat distribution means 35, at a temperature T_{A} equal to about that of the internal environment 100, by adsorbing said heat from a fluid insulating volume 104 at a temperature T_{I} around the perimeter surface 102 or on the walls themselves of said internal environment 100. Such known heat distribution means 35 may comprise conventional radiant panels, fan coils, air blades or like heat distribution or absorption devices.

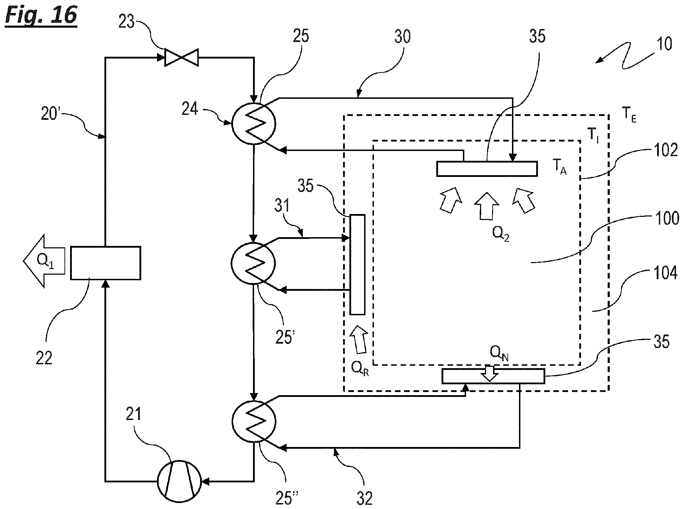

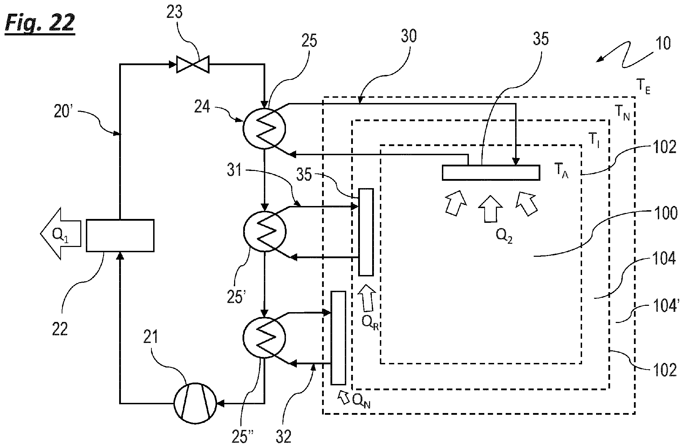

In further other variant embodiments, with particular reference to figures 16, 21, and 22, the thermotechnical system 10 can comprise at least one additional n-th heat exchanger 25" placed in series or in parallel with said second heat exchanger 25', said n-th heat exchanger 25" being in thermal connection with one n-th thermal circuit 32 suitable for the recovery and adsorption of additional heat portions Q_{N} on at least a part of said insulating volume 104 arranged around said internal environment 100, in such a way as to allow for a differentiated adsorption of heat Q₂, Q_{R} and Q_{N} at different temperatures and in different zones or volumes, generally in the internal 100 and the insulating volume 104. In another further embodiment, with particular reference to figure 22, the adsorption of additional portions of overheating heat Q_{N} can also take place in at least a further insulating volume 104' concentric to said insulating volume 104, said volumes 104, 104' being arranged to form *n* external insulating zones or concentric shells at temperatures T_{N} gradually increasing, up to a maximum of about 25°C, allowed by the type of refrigerant used.

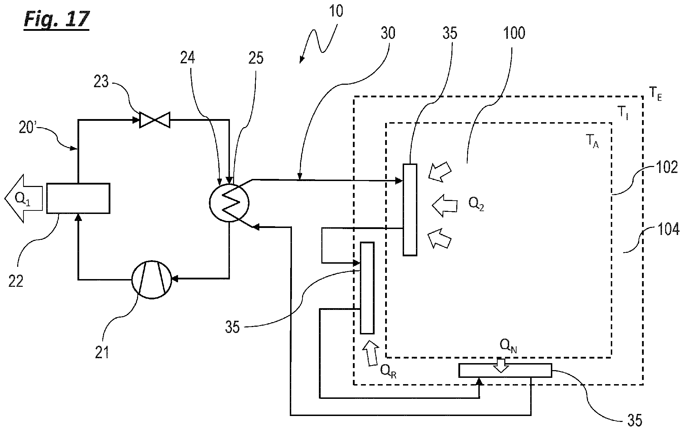

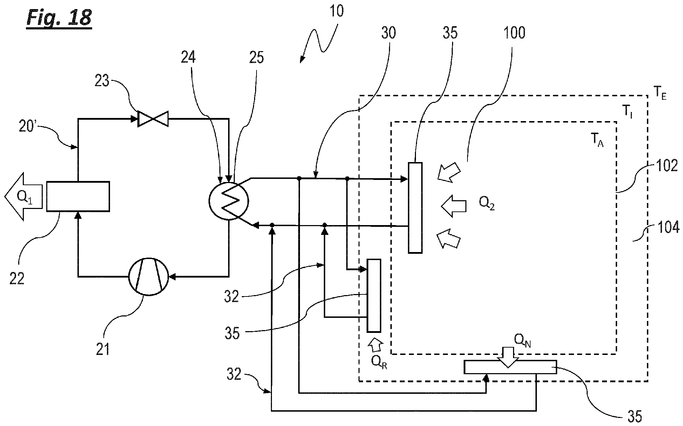

With reference to figures 17 and 18, in further possible alternative variants of the simplest configuration of said system 10 in figure 14, i.e. with only one heat exchanger 25, it is possible to provide for the use of said heat exchanger 25 connected thermally with n thermal circuits 30, 31 and 32 placed in parallel or in series, and suitable for operating at different thermal distribution temperatures.

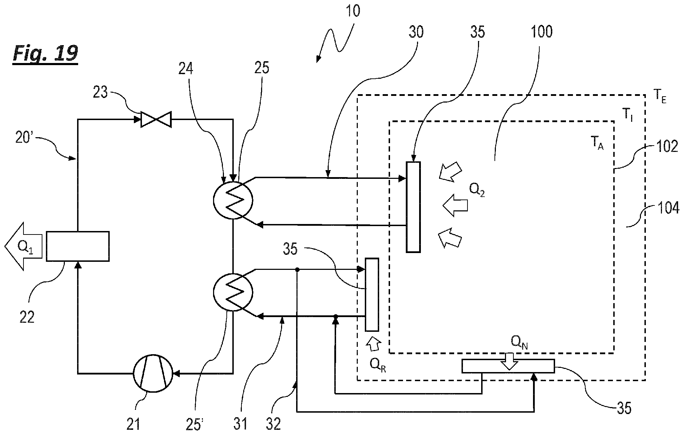

In further possible constructive variants of figures 19 and 10, alternative to the previous ones and comprising one n-th thermal circuit 32 connected to said second heat exchanger 25', said second thermal circuit 31 and said n-th thermal circuit 32 can be thermally connected to the second heat exchanger 25' and arranged in series or in parallel with each other.

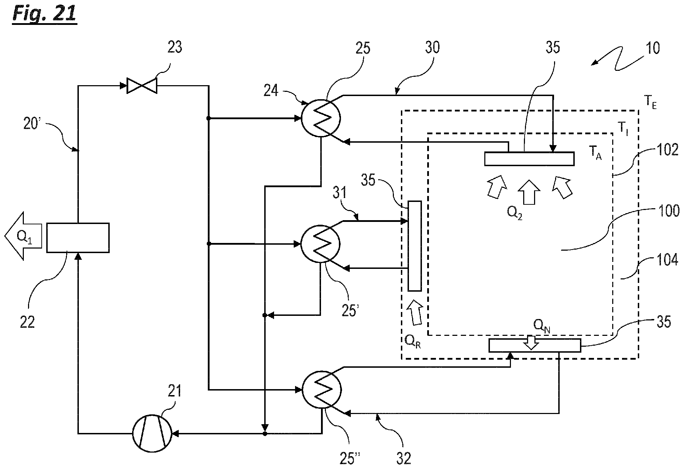

In a further variant of figure 21, alternative to the embodiment of figure 16 and comprising, in addition to a second heat exchanger 25', also one n-th heat exchanger 25", said first, second and n-th heat exchanger 25, 25', 25" can also be placed in thermal fluid connection in parallel with each other.

With reference to all the various embodiments of the figures, said insulating volume 104, defining a spatial shell of said internal environment 100 or a portion thereof, can comprise a wall or a solid separation surface between the internal environment 100 and the external environment, generally comprising also the fluid boundary layer of air in direct contact with the same wall, and can comprise, for example, a wall and/or a radiant panel located close to or on the perimeter surface 102 through which the recovered heat Q_{R} is distributed from the subcooling at a temperature T_{I}.

In other embodiments, the same insulating volume 104 can also be defined by an empty volume, or empty environment, located between the cavity of two walls or peripheral surfaces 102, where internally to said empty volume, empty environment or interspace the heat Q_{R} recovered by the overheating is adsorbed and transferred, by using known heat distribution means 35, such as fan coils able to condition the air present in the cavity between the walls or other equivalent devices.

In a further embodiment, of the configuration as a refrigerator with particular reference to Figure 16, said insulating volume 104, or a portion of the same volume, may not necessarily be defined by a solid wall or confined between two solid walls, but it may be defined only by a fluid wall 103 formed by a jet of air or fluid mass projected along the peripheral surface 102, preferably from the ceiling to the floor of the internal environment 100, by known heat distribution means such as a traditional jet or air blade 36, where said jet of air projected along said wall 102 at a temperature equal to about T_{A}, adsorbs the portion of heat Q_{R} from the internal environment 100.

The present invention also claims a method for the distributed adsorption and the high efficiency heat transfer according to claim 14, in the configuration of the thermal machine as a refrigerator, said method comprising the steps of:
- generating a refrigerating thermal capacity through mechanical work on a refrigerant fluid of a thermal machine 20' in a thermotechnical system 10;
- transferring the heat Q₂ in a primary thermal circuit 30 from an internal environment 100 to bring it to a temperature T_{A};
- exchanging said heat Q₂ transferred in a primary thermal circuit 30 with said thermal machine 20';
- adsorbing a portion of residual heat Q_{R} in an insulating volume 104 arranged and developed around said internal environment 100 in such a way as to create an insulating shell of said internal environment 100 at a temperature T_{I}.
- recovering the portion of residual heat Q_{R} with a further heat exchange step with the thermal machine 20' exploiting the residual thermal capacity of the refrigerant fluid leaving the first heat exchange.

According to the present invention, the step of recovery of residual heat Q_{R} can take place by means of a second heat exchange step or overheating, following the first heat exchange step, with a secondary thermal circuit 31 of overheating the refrigerant fluid of the refrigerator 20' or the thermovector fluid of a thermal circuit of distribution of a thermotechnical system 10.

The method may also comprise additional and subsequent n-th steps for the adsorption and recovery of additional heat portions Q_{N}, such as the steps of:
- adsorbing the residual proportion of heat Q_{N} from an insulating volume 104, 104' arranged and developed around said internal environment 100 in such a way as to create a further insulating shell of said internal environment 100 at a temperature T_{N}.
- recovering the portion of residual heat Q_{N}.

Advantageously, the recovery step of the residual n-th portion of heat Q_{R} can take place also by means of one n-th heat exchange step or overheating, following the step of adsorption of heat Q_{R}, by using one n-th thermal circuit 32 of overheating the refrigerant fluid of the refrigerator 20' or the thermovector fluid of a thermal circuit of distribution of a thermotechnical system 10.

The description of the thermotechnical system 10 and of the method for high efficiency heat transfer and distribution of the present invention has the following operation.

With reference to figures 23a, 23b and 23c, in order to evaluate the actual increase in efficiency and of the refrigerating yield obtained according to the present invention, some numerical simulation data are shown. Starting from the characteristic parameters of a thermotechnical system provided with a refrigerator according to known art, the results obtained are compared with those of a thermotechnical system 10 provided with distributed overheating and adsorption of heat Q_{R}, of overheating around the internal environment 100 to be air-conditioned in such a way as to create an insulating shell.

The p-H (pressure-enthalpy) diagram in figure 23a and the relative table in figure 23c also show, as already explained above, the various steps of the thermodynamic cycle of the thermal machine analysed in relation to the pressure p of the refrigerant fluid, as expressed in bar, and to the enthalpy H, as expressed in kJ (kilojoules), assimilable in first approximation to the energy content of the refrigerant fluid. It is evident how the substantial difference between the two proposed conditions differentiates the energy content (enthalpy) of the two thermal cycles and the respective temperatures. More precisely, during the evaporation step of the refrigerant fluid the following conditions will occur, as shown in the table of figure 23c:
H3 = 628 kJ and H3' = 650 kJ. The difference between the reported enthalpies, equal to 22 kJ, shows that a further heat absorption during the evaporation step leads to an effective gain in terms of energy. This heat is the heat that is subsequently absorbed by the peripheral internal surfaces 102 of the internal environment 100 to be air-conditioned, while the temperature of the refrigerant fluid entering the compressor is higher, as is also shown in the table of figure 23c, in fact it follows that: T3 = 14 °C and T3' = 25 °C.

With reference to the T-S diagram in figure 23b, it can be seen that the addition of a second heat exchange circuit acting as overheating of the refrigerant fluid of the refrigerator 20 allows the point of operation 3 of a traditional system to be moved to the isobar of the T-S diagram, at the point 3', i.e. the point of operation of a system with overheating heat absorption and overheating of the refrigerant fluid, thus obtaining a higher temperature of the refrigerant fluid at the compressor and condenser inlet, and in the dry steam condition, as shown by the measurements of T3' and H3' in the table in figure 23c. The area identified by the comparison of the curves between points 3, 3', 4, 4' determines the portion of heat Q_{R} that can be extracted and recovered with the overheating and such as to demonstrate the greater efficiency of the thermotechnical system and of the method of the present invention. Referring for example to figure 13, the second overheating heat exchanger 25' is arranged in series with the first heat exchanger 25, typically coinciding with the evaporator of the refrigerator 20. Said second heat exchanger 25' supplies a secondary thermal circuit 31 that receives the thermovector fluid, to which the adsorbed and recovered portion of heat Q_{R} has been transferred, at a temperature equal to about the temperature T_{A} of the internal environment 100, from the walls of the internal environment 100 itself in such a way as to form an insulating volume 104 around the internal environment 100 at a temperature T_{I}, realizing a sort of shell or fluid insulating thermal cushion developed around the peripheral surfaces 102. The latter are therefore maintained at a temperature close to or around the temperature T_{A} of the internal environment 100 by known heat distribution means 35, which can be advantageously a plurality of radiant panels or fan coils, or by means of air blades 36. The temperature of the insulating volume T_{I}, being lower than the exploit of the external environment, decreases the thermal conductivity of the walls and the thermal gradient outward, so as to improve the overall efficiency of the thermal machine or refrigerator 20'. Said insulating volume 104, within which the portion of heat Q_{R} recovered with the overheating is adsorbed, can be advantageously defined, in different application variants, depending on the structure or application where the thermotechnical system 10 is installed. In the event that the internal environment 100 is delimited by one or more solid walls such as walls, the heat Q_{R} recoverable by the overheating can be advantageously absorbed by a plurality of radiant panels arranged on said solid walls or realizing and comprising the walls themselves and their boundary layer.

In the event that said insulating volume 104 is defined between two solid walls of an internal environment 100, for example a cavity, the heat Q_{R} recoverable by the overheating can be advantageously absorbed by means of fan coils or other heat distribution means suitable to bring the interspace between the two walls to the temperature T_{I}.

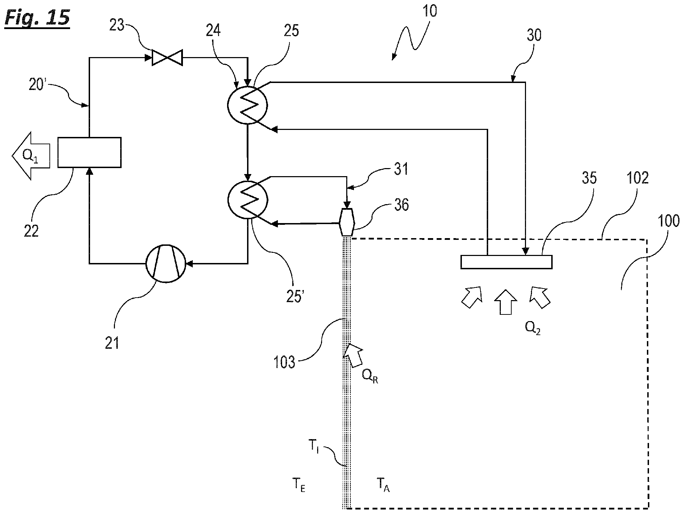

In other types of applications and construction variants, with particular reference to figure 15, the insulating volume 104 can also not necessarily be defined or confined between walls or solid walls but it can simply be defined by a fluid wall 103, advantageously projected between the internal environment 100 at temperature T_{A} and the external environment. The fluid wall 103 can be generated by an air blade 36 for absorbing the heat Q_{R} recovered by the overheating by means of a fluid jet at a temperature T_{I}.

As can be seen from the above, the advantages of the thermotechnical system and the method for high efficiency heat transfer and distribution of the present invention are obvious.

The thermotechnical system 10 and the method for high efficiency heat transfer and distribution is particularly advantageous in terms of performance as it guarantees an increase in the efficiency of the system refrigerating machine-heat pump-refrigerator as a whole, since the thermal energy and the refrigerating capacity produced and available to the air-conditioned internal environment 100 is greater with the recovery of the residual heat Q_{R} because it creates around the same internal environment an active internal insulation. The experimental and simulation results show an appreciable increase of about 20% in the performance of the system, with an increased COP value such as to reach values equal to 7 and thus ensure a high efficiency of the system such as to compensate for the heat dispersed by the shell without traditional insulation.

The thermotechnical system 10 and the method for high efficiency heat transfer and distribution are also particularly advantageous because they provide users with a system that is even more versatile and suitable for applications in environments where traditional insulation or thermal insulation is not present or cannot be installed.

Another advantage of the thermotechnical system 10 and of the method for high efficiency heat transfer and distribution is that it guarantees a high level of living comfort in the internal environment 100 thanks to the fact that it can air-condition different zones at different temperatures, while guaranteeing an improvement in the hygroscopic characteristics of the internal environment 100, with reduced formation of condensation on the walls and proliferation of mould and bacteria.

Another advantage of the thermotechnical system 10 and of the method for high efficiency heat transfer and distribution is to ensure greater versatility of installation so that it can be used for any type of civil or industrial installation and easily adaptable to existing structures. Another advantage of the thermotechnical system 10 and of the method for high efficiency heat transfer and distribution is to allow, in the configuration as a refrigerator, the operation of the compressor with a completely gaseous refrigerant without the presence of drops of fluid that could affect its operation.

Although the invention has been described above with particular reference to some preferred embodiments, given byway of non-limiting example, numerous modifications and variations will be apparent to a person skilled in the art in the light of the above description. The present invention, therefore, intends to embrace all modifications and variations, which fall within the protective scope of the following claims.

## Claims

1. A thermotechnical system (10) for high efficiency heat transfer and distribution comprising a thermal machine (20') configured as a refrigerator with an evaporator (24), at least a first heat exchanger (25) placed in a heat exchange connection with a primary thermal circuit (30) and suitable for transferring the heat Q₂ from an internal environment (100) to bring it to a temperature Ta, wherein said thermotechnical system (10) is placed in a thermal connection with a secondary thermal circuit (31), thermally connected with said first heat exchanger (25) and configured for recovering the residual heat Q_{R} from said primary thermal circuit (30) at a higher temperature than said primary thermal circuit (30) exploiting the residual thermal capacity of a refrigerant fluid of said thermal machine (20'), said secondary thermal circuit (31), being suitable for absorbing said residual heat Q_{R} from at least one perimeter surface (102) of said internal environment (100), so as to define an insulating shell or volume (104, 104') at a temperature Ti lower than an external temperature Te developed at least partly around said perimeter surface (102) of said internal environment (100); wherein:
the thermotechnical system (10) comprises heat absorption means (35; 36) thermally connected at an outlet of said first heat exchanger (25) and capable of operating at a higher temperature, said heat absorption means (35) being in thermal connection with said secondary thermal circuit (31) and capable of absorbing said residual heat Q_{R} over at least one perimeter surface (102) of an internal environment (100).

2. The thermotechnical system (10) according to claim 1, comprising a second heat exchanger (25') thermally connected at the outlet of said first heat exchanger (25) and capable of operating at a higher temperature, said second heat exchanger (25') being in thermal connection with said secondary thermal circuit (31) capable of absorbing said heat Q_{R} over at least one perimeter surface (102) of an internal environment (100) by said heat absorption means (35).

3. The thermotechnical system (10) according to claim 1, comprising at least one n-th heat exchanger (25") thermally connected at the outlet by said first heat exchanger (25) in series or in parallel to said second heat exchanger (25'), said n-th heat exchanger (25") being in thermal connection with one n-th thermal circuit (32) suitable for the recovery of a further portion of residual heat Q_{N}, in such a way as to allow a differentiated absorption of heat Q₂, Q_{R} and Q_{N} at different temperatures and in different zones or volumes.

4. The thermotechnical system (10) according to claim 3, wherein the absorption of additional further portions of residual heat Q_{N} takes place in at least a further insulating volume (104') concentric to said insulating volume (104), said insulating volumes (104, 104') being arranged to form *n* external insulating zones or concentric shells at increasing temperatures T_{N}.

5. The thermotechnical system (10) according to claim 1, where said first heat exchanger (25) is thermally connected with n thermal circuits (30, 31, 32) placed in parallel or in series and suitable for operating at different thermal absorption temperatures.

6. The thermotechnical system (10) according to claim 3, wherein said second thermal circuit (31) and said n-th thermal circuit (32) are thermally connected to said second heat exchanger (25') and arranged in series or in parallel with each other.

7. The thermotechnical system (10) according to claim 3, wherein the first, second and n-th heat exchangers (25, 25', 25") are arranged in thermal fluid connection in parallel with each other.

8. The thermotechnical plant (10) according to claim 1, where said heat absorption means (35) comprise heat-absorbing panels.

9. The thermotechnical system (10) according to claim 1, where said heat absorption means (35) comprise at least a fan coil.

10. The thermotechnical system (10) according to claim 1, where said heat absorption means (35) include at least one air blade (36).

11. The thermotechnical system (10) according to claim 1, where said insulating volume (104, 104') is defined by a wall or a solid surface separating the internal environment (100) from the external environment.

12. The thermotechnical system (10) according to claim 1, where said insulating volume (104, 104') is defined by an empty volume placed between the interspace of two walls or peripheral surfaces (102).

13. The thermotechnical system (10) according to claim 1, where said insulating volume (104, 104'), is defined by a fluid wall (103) comprising a jet of air or fluid mass projected along the peripheral surface (102) to which the portion of residual heat Q_{R}, recovered from overheating, has been transferred.

14. A method for absorbing and transferring heat comprising the steps of:
- providing a thermal machine (20') having an evaporator (24), at least a first heat exchanger (25) placed in a heat exchange connection with a primary thermal circuit (30) and suitable for transferring the heat Q₂ from an internal environment (100);
- generating a refrigerating thermal capacity through mechanical work on a refrigerant fluid of the thermal machine (20') configured to operate in cooling mode as a refrigerator in a thermotechnical system (10);
- transferring the heat Q₂ in a primary thermal circuit (30) from an internal environment (100) to bring it to a temperature T_{A};
- exchanging the heat Q₂ transferred in the primary thermal circuit (30) with said thermal machine (20');
- providing a secondary thermal circuit (31), thermally connected with said first heat exchanger (25);
- absorbing by heat absorption means (35) the portion of residual heat Q_{R} from an insulating volume (104) arranged and developed around said internal environment (100) by the secondary thermal circuit (31) in such a way as to create an insulating shell of said internal environment (100) at a temperature T_{I} lower than an external temperature T_{E};
- recovering the portion of residual heat Q_{R} with a second heat exchanging step, following said heat exchanging step with the primary thermal circuit (30), with a secondary thermal circuit (31) of overheating of the refrigerant fluid of said thermal machine (20') at a higher temperature than said primary thermal circuit (30); thus exploiting the residual thermal capacity of the refrigerant fluid.

15. The method according to claim 14, where said step of recovery of residual heat Q_{R} takes place by means of a second heat exchange step following the first heat exchange step, with an overheating secondary thermal circuit (31) providing a second heat exchanger (25') thermally connected at an outlet of said first heat exchanger (25) and capable of operating at a higher temperature, said second heat exchanger (25') being in thermal connection with said secondary thermal circuit (31) capable of absorbing said residual heat Q_{R} over at least one perimeter surface (102) of an internal environment (100) by heat absorption means (35).

16. The method according to claim 14, comprising the additional steps of:
- adsorbing the residual proportion of residual heat Q_{N} from an insulating volume (104, 104') arranged around said internal environment 100 in such a way as to create a further insulating shell of said environment (100) at a temperature T_{N}.
- recovering the portion of residual heat Q_{N}.

17. The method according to claim 16, where said recovery step of at least one portion of residual heat Q_{N} takes place by means of one n-th heat exchange or overheating step, following the step of absorption of residual heat Q_{N}, with at least one n-th overheating thermal circuit (32) of the refrigerant fluid.

## Patentansprüche

1. Wärmetechnisches System (10) für eine hocheffiziente Wärmeübertragung und -verteilung, umfassend eine als Kühlschrank konfigurierte thermische Maschine (20') mit einem Verdampfer (24), mindestens einem ersten Wärmetauscher (25), der in einer Wärmeaustauschverbindung mit einem primären thermischen Kreislauf (30) angeordnet und geeignet ist, die Wärme Q₂ aus einer inneren Umgebung (100) zu übertragen, um sie auf eine Temperatur Tₐ zu bringen, wobei das wärmetechnische System (10) in einer thermischen Verbindung mit einem sekundären thermischen Kreislauf (31) angeordnet ist, thermisch mit dem ersten Wärmetauscher (25) verbunden und so konfiguriert ist, dass er die Restwärme Q_{R} des primären thermischen Kreislaufs (30) bei einer höheren Temperatur als der primäre thermische Kreislauf (30) zurückgewinnt, indem er die Restwärmekapazität eines kühlenden Fluids der thermischen Maschine (20') nutzt, wobei der sekundäre thermische Kreislauf (31) geeignet ist, die Restwärme Q_{R} von mindestens einer Umfangsfläche (102) der inneren Umgebung (100) zu absorbieren, um eine isolierende Hülle oder ein isolierendes Volumen (104, 104') mit einer Temperatur Tᵢ zu definieren, die niedriger ist als eine Außentemperatur Tₑ, die sich zumindest teilweise um die Umfangsfläche (102) der inneren Umgebung (100) entwickelt;
wobei:
Das wärmetechnische System (10) Wärmeabsorptionsmittel (35; 36) umfasst, die thermisch mit einem Ausgang des ersten Wärmetauschers (25) verbunden und in der Lage sind, bei einer höheren Temperatur zu arbeiten, wobei die Wärmeabsorptionsmittel (35) in thermischer Verbindung mit dem sekundären Wärmekreislauf (31) stehen und in der Lage sind, die Restwärme Q_{R} über mindestens eine Umfangsfläche (102) einer inneren Umgebung (100) zu absorbieren.

2. Wärmetechnisches System (10) nach Anspruch 1, umfassend einen zweiten Wärmetauscher (25'), der thermisch mit dem Auslass des ersten Wärmetauschers (25) verbunden und in der Lage ist, bei einer höheren Temperatur zu arbeiten, wobei der zweite Wärmetauscher (25') in thermischer Verbindung mit dem sekundären Wärmekreislauf (31) steht, der in der Lage ist, die Wärme Q_{R} über mindestens eine Umfangsfläche (102) einer inneren Umgebung (100) durch die Wärmeabsorptionsmittel (35) zu absorbieren.

3. Wärmetechnisches System (10) nach Anspruch 1, umfassend mindestens einen n-ten Wärmetauscher (25"), der am Ausgang durch den ersten Wärmetauscher (25) in Reihe oder parallel zum zweiten Wärmetauscher (25') thermisch verbunden ist, wobei der n-te Wärmetauscher (25") in thermischer Verbindung mit einem n-ten thermischen Kreislauf (32) steht, der zur Rückgewinnung eines weiteren Teils der Restwärme Q_{N} geeignet ist, so dass eine differenzierte Absorption von Wärme Q₂, Q_{R} und Q_{N} bei unterschiedlichen Temperaturen und in unterschiedlichen Zonen oder Volumina möglich ist.

4. Wärmetechnisches System (10) nach Anspruch 3, wobei die Absorption zusätzlicher weiterer Anteile der Restwärme Q_{N} in mindestens einem weiteren, zum Isoliervolumen (104) konzentrischen Isoliervolumen (104') erfolgt, wobei die Isoliervolumen (104, 104') so angeordnet sind, dass sie bei steigenden Temperaturen T_{N} n äußere Isolierzonen oder konzentrische Schalen bilden.

5. Wärmetechnisches System (10) nach Anspruch 1, bei dem der erste Wärmetauscher (25) mit n parallel oder in Reihe geschalteten Wärmekreisläufen (30, 31, 32) thermisch verbunden ist, die bei unterschiedlichen Wärmeaufnahme-Temperaturen arbeiten können.

6. Wärmetechnisches System (10) nach Anspruch 3, wobei der zweite Wärmekreislauf (31) und der n-te Wärmekreislauf (32) mit dem zweiten Wärmetauscher (25') thermisch verbunden und in Reihe oder parallel zueinander angeordnet sind.

7. Wärmetechnisches System (10) nach Anspruch 3, wobei der erste, zweite und n-te Wärmetauscher (25, 25', 25") in thermischer Fluidverbindung parallel zueinander angeordnet sind.

8. Wärmetechnisches System (10) nach Anspruch 1, wobei die Wärmeabsorptionsmittel (35) wärmeabsorbierende Platten umfassen.

9. Wärmetechnisches System (10) nach Anspruch 1, wobei die Wärmeabsorptionsmittel (35) mindestens einen Gebläsekonvektor umfassen.

10. Wärmetechnisches System (10) nach Anspruch 1, wobei die Wärmeabsorptionsmittel (35) mindestens eine Luftschaufel (36) umfassen.

11. Wärmetechnisches System (10) nach Anspruch 1, wobei das Isoliervolumen (104, 104') durch eine Wand oder eine feste Oberfläche definiert ist, die die innere Umgebung (100) von der äußeren Umgebung trennt.

12. Wärmetechnisches System (10) nach Anspruch 1, bei dem das Isoliervolumen (104, 104') durch ein leeres Volumen definiert ist, das sich zwischen dem Zwischenraum zweier Wände oder Umfangsflächen (102) befindet.

13. Wärmetechnisches System (10) nach Anspruch 1, bei dem das Isoliervolumen (104, 104') durch eine Fluidwand (103) definiert ist, die einen Luft- oder Fluidstrahl umfasst, der entlang der Umfangsfläche (102) projiziert wird, auf die der Teil der Restwärme Q_{R}, der durch Überhitzung zurückgewonnen wurde, übertragen wurde.

14. Verfahren zum Absorbieren und Übertragen von Wärme, das die folgenden Schritte umfasst:
- Bereitstellen einer thermischen Maschine (20') mit einem Verdampfer (24), mindestens einem ersten Wärmetauscher (25), der in einer Wärmeaustauschverbindung mit einem primären thermischen Kreislauf (30) steht und geeignet ist, die Wärme Q₂ aus einer internen Umgebung (100) zu übertragen;
- Erzeugen einer kühlenden Wärmekapazität durch mechanische Arbeit an einem Kühlfluid der thermischen Maschine (20'), die so konfiguriert ist, dass sie im Kühlmodus als Kältemaschine in einem wärmetechnischen System (10) arbeitet;
- Übertragen der Wärme Q₂ in einem primären Wärmekreislauf (30) aus einer inneren Umgebung (100), um diese auf eine Temperatur T_{A} zu bringen;
- Austausch der in dem primären Wärmekreislauf (30) übertragenen Wärme Q₂ mit der Wärmemaschine (20');
- Bereitstellung eines sekundären Wärmekreislaufs (31), der mit dem ersten Wärmetauscher (25) thermisch verbunden ist;
- Absorbieren des Anteils der Restwärme Q_{R} aus einem Isoliervolumen (104), das um die innere Umgebung (100) herum angeordnet ist und sich durch den sekundären Wärmekreislauf (31) entwickelt, durch Wärmeabsorptionsmittel (35), um eine Isolierhülle der inneren Umgebung (100) bei einer Temperatur T₁ zu schaffen, die niedriger als eine Außentemperatur T_{E} ist;
- Rückgewinnung des Teils der Restwärme Q_{R} mit einem zweiten Wärmeaustauschschritt, der dem Wärmeaustauschschritt mit dem primären thermischen Kreislauf (30) folgt, mit einem sekundären thermischen Kreislauf (31) der Überhitzung des kühlenden Fluids der thermischen Maschine (20') bei einer höheren Temperatur als dem primären thermischen Kreislauf (30);
so wird die restliche thermische Kapazität des kühlenden Fluids ausgenutzt.

15. Verfahren nach Anspruch 14, wobei der Schritt der Rückgewinnung der Restwärme Q_{R} mittels eines zweiten Wärmeaustauschschritts nach dem ersten Wärmeaustauschschritt erfolgt, wobei ein überhitzender sekundärer Wärmekreislauf (31) einen zweiten Wärmetauscher (25') bereitstellt, der thermisch mit einem Auslass des ersten Wärmetauschers (25) verbunden und in der Lage ist, bei einer höheren Temperatur zu arbeiten, wobei der zweite Wärmetauscher (25') in thermischer Verbindung mit dem sekundären Wärmekreislauf (31) steht, der in der Lage ist, die Restwärme Q_{R} über mindestens eine Umfangsfläche (102) einer inneren Umgebung (100) durch Wärmeabsorptionsmittel (35) zu absorbieren.

16. Verfahren nach Anspruch 14, umfassend die zusätzlichen Schritte:
- Adsorbieren des restlichen Anteils der Restwärme Q_{N} aus einem Isoliervolumen (104, 104'), das um die innere Umgebung (100) herum angeordnet ist, so dass eine weitere Isolierhülle der Umgebung (100) bei einer Temperatur T_{N} entsteht;
- Rückgewinnung des Anteils der Restwärme Q_{N}.

17. Verfahren nach Anspruch 16, wobei der Schritt der Rückgewinnung mindestens eines Teils der Restwärme Q_{N} mittels eines n-ten Wärmeaustausch- oder Überhitzungsschritts im Anschluss an den Schritt der Absorption der Restwärme Q_{N} mit mindestens einem n-ten Überhitzungs-Wärmekreislauf (32) des Kältemittels erfolgt.

## Revendications

1. - Système thermotechnique (10) pour un transfert et une distribution de chaleur à haut rendement comprenant une machine thermique (20') configurée en tant que réfrigérateur avec un évaporateur (24), au moins un premier échangeur de chaleur (25) placé dans une liaison d'échange de chaleur avec un circuit thermique primaire (30) et apte à transférer la chaleur Q₂ à partir d'un environnement interne (100) pour l'amener à une température Ta, ledit système thermotechnique (10) étant placé dans une liaison thermique avec un circuit thermique secondaire (31), relié thermiquement audit premier échangeur de chaleur (25) et configuré pour récupérer la chaleur résiduelle Q_{R} provenant dudit circuit thermique primaire (30) à une température supérieure à celle dudit circuit thermique primaire (30) en exploitant la capacité thermique résiduelle d'un fluide frigorigène de ladite machine thermique (20'), ledit circuit thermique secondaire (31) étant apte à absorber ladite chaleur résiduelle Q_{R} à partir d'au moins une surface périphérique (102) dudit environnement interne (100), de façon à définir une enveloppe isolante ou un volume isolant (104, 104') à une température Ti inférieure à une température externe Te développée au moins en partie autour de ladite surface périphérique (102) dudit environnement interne (100) ;
dans lequel :
le système thermotechnique (10) comprend des moyens d'absorption de chaleur (35 ; 36) reliés thermiquement à une sortie dudit premier échangeur de chaleur (25) et capables de fonctionner à une température plus élevée, lesdits moyens d'absorption de chaleur (25) étant en liaison thermique avec ledit circuit thermique secondaire (31) et capables d'absorber ladite chaleur résiduelle Q_{R} sur au moins une surface périphérique (102) d'un environnement interne (100).

2. - Système thermotechnique (10) selon la revendication 1, comprenant un deuxième échangeur de chaleur (25') relié thermiquement à une sortie dudit premier échangeur de chaleur (25) et capable de fonctionner à une température plus élevée, ledit deuxième échangeur de chaleur (25') étant en liaison thermique avec ledit circuit thermique secondaire (31) capable d'absorber ladite chaleur Q_{R} sur au moins une surface périphérique (102) d'un environnement interne (100) par lesdits moyens d'absorption (35) .

3. - Système thermotechnique (10) selon la revendication 1, comprenant au moins un n-ième échangeur de chaleur (25") relié thermiquement à la sortie par ledit premier échangeur de chaleur (25) en série ou en parallèle avec ledit deuxième échangeur de chaleur (25'), ledit n-ième échangeur de chaleur (25") étant en liaison thermique avec un n-ième circuit thermique (32) approprié pour la récupération d'une partie supplémentaire de chaleur résiduelle Q_{N}, d'une manière permettant une absorption différenciée de chaleur Q₂, Q_{R} et Q_{N} à différentes températures et dans différents volumes ou zones.

4. - Système thermotechnique (10) selon la revendication 3, dans lequel l'absorption de parties supplémentaires de chaleur résiduelle Q_{N} a lieu dans au moins un volume isolant supplémentaire (104') concentrique audit volume isolant (104), lesdits volumes isolants (104, 104') étant agencés pour former n zones isolantes externes ou enveloppes concentriques à des températures croissantes T_{N}.

5. - Système thermotechnique (10) selon la revendication 1, dans lequel ledit premier échangeur de chaleur (25) est relié thermiquement à n circuits thermiques (30, 31, 32) placés en parallèle ou en série et aptes à fonctionner à différentes températures d'absorption thermique.

6. - Système thermotechnique (10) selon la revendication 3, dans lequel ledit deuxième circuit thermique (31) et ledit n-ième circuit thermique (32) sont reliés thermiquement audit deuxième échangeur de chaleur (25') et disposés en série ou en parallèle l'un avec l'autre.

7. - Système thermotechnique (10) selon la revendication 3, dans lequel les premier, deuxième et n-ième échangeurs de chaleur (25, 25', 25") sont disposés en liaison fluidique thermique en parallèle les uns avec les autres.

8. - Installation thermotechnique (10) selon la revendication 1, dans laquelle lesdits moyens d'absorption de chaleur (35) comprennent des panneaux d'absorption de chaleur.

9. - Système thermotechnique (10) selon la revendication 1, dans lequel lesdits moyens d'absorption de chaleur (35) comprennent au moins un ventilo-convecteur.

10. - Système thermotechnique (10) selon la revendication 1, dans lequel lesdits moyens d'absorption de chaleur (35) comprennent au moins une lame d'air (36).

11. - Système thermotechnique (10) selon la revendication 1, dans lequel ledit volume isolant (104, 104') est défini par une paroi ou une surface solide séparant l'environnement interne (100) de l'environnement externe.

12. - Système thermotechnique (10) selon la revendication 1, dans lequel ledit volume isolant (104, 104') est défini par un volume vide placé entre l'espace intercalaire de deux parois ou surfaces périphériques (102) .

13. - Système thermotechnique (10) selon la revendication 1, dans lequel ledit volume isolant (104, 104') est défini par une paroi fluide (103) comprenant un jet de masse de fluide ou d'air projeté le long de la surface périphérique (102) à laquelle la partie de chaleur résiduelle Q_{R}, récupérée de la surchauffe, a été transférée.

14. - Procédé d'absorption et de transfert de chaleur comprenant les étapes :
- disposer une machine thermique (20') ayant un évaporateur (24), au moins un premier échangeur de chaleur (25) placé dans une liaison d'échange de chaleur avec un circuit thermique primaire (30) et apte à transférer la chaleur Q₂ à partir d'un environnement interne (100) ;
- générer une capacité thermique de réfrigération par un travail mécanique sur un fluide frigorigène d'une machine thermique (20') configurée pour fonctionner en mode refroidissement en tant que réfrigérateur dans un système thermotechnique (10) ;
- transférer la chaleur Q₂ dans un circuit thermique primaire (30) à partir d'un environnement interne (100) pour l'amener à une température T_{A} ;
- échanger la chaleur Q₂ transférée dans le circuit thermique primaire (30) avec ladite machine thermique (20') ;
- disposer un circuit thermique secondaire (31), relié thermiquement audit premier échangeur de chaleur (25) ;
- absorber, par des moyens d'absorption de chaleur (35) la partie de chaleur résiduelle Q_{R} à partir d'un volume isolant (104) disposé et développé autour dudit environnement interne (100) par le circuit thermique secondaire (31) d'une manière créant une enveloppe isolante dudit environnement interne (100) à une température T_{I} inférieure à une température externe T_{E} ;
- récupérer la partie de chaleur résiduelle Q_{R} avec une seconde étape d'échange de chaleur, après ladite étape d'échange de chaleur avec le circuit thermique primaire (30), avec un circuit thermique secondaire (31) de surchauffe du fluide frigorigène de ladite machine thermique (20') à une température plus élevée que ledit circuit thermique primaire (30) ; exploitant ainsi la capacité thermique résiduelle du fluide frigorigène.

15. - Procédé selon la revendication 14, dans lequel ladite étape de récupération de chaleur résiduelle Q_{R} a lieu au moyen d'une deuxième étape d'échange de chaleur après la première étape d'échange de chaleur, avec un circuit thermique secondaire de surchauffe (31), disposant un deuxième échangeur de chaleur (25') relié thermiquement à une sortie dudit premier échangeur de chaleur (25) et capable de fonctionner à une température plus élevée, ledit deuxième échangeur de chaleur (25') étant en liaison thermique avec ledit circuit thermique secondaire (31) capable d'absorber ladite chaleur résiduelle Q_{R} sur au moins une surface périphérique (102) d'un environnement interne (100) par des moyens d'absorption de chaleur (35).

16. - Procédé selon la revendication 14, comprenant les étapes supplémentaires :
- adsorber la proportion résiduelle de chaleur résiduelle Q_{N} à partir d'un volume isolant (104, 104') disposé autour dudit environnement interne (100) d'une manière créant une enveloppe isolante supplémentaire dudit environnement (100) à une température T_{N} ;
- récupérer la partie de chaleur résiduelle Q_{N}.

17. - Procédé selon la revendication 16, dans lequel ladite étape de récupération d'au moins une partie de chaleur résiduelle Q_{N} a lieu au moyen d'une n-ième étape d'échange de chaleur ou de surchauffe, après l'étape d'absorption de chaleur Q_{N}, avec au moins un n-ième circuit thermique de surchauffe (32) du fluide frigorigène.
